(19) Europäisches Patentamt
European Patent Office
Office européen des brevets

(11) Numéro de publication : **0 138 670**
**B1**

(12) **FASCICULE DE BREVET EUROPÉEN**

(45) Date de publication du fascicule du brevet : **25.05.88**

(51) Int. Cl.⁴ : **C 07 F 7/12**, C 01 B 33/04

(21) Numéro de dépôt : **84401847.3**

(22) Date de dépôt : **18.09.84**

(54) **Procédé de fabrication de silanes hydrogénés par redistribution.**

(30) Priorité : **28.09.83 FR 8315402**

(43) Date de publication de la demande : **24.04.85 Bulletin 85/17**

(45) Mention de la délivrance du brevet : **25.05.88 Bulletin 88/21**

(84) Etats contractants désignés : **BE DE FR GB IT NL**

(56) Documents cités :
**FR-A- 1 457 139**
**FR-A- 2 096 605**

(73) Titulaire : **RHONE-POULENC CHIMIE**
**25, quai Paul Doumer**
**F-92408 Courbevoie Cédex (FR)**

(72) Inventeur : **Lepage, Jean-Luc**
**81, chemin de Chavril**
**F-69110 Sainte-Foy Les Lyon (FR)**
Inventeur : **Soula, Gérard**
**33, rue Nungesser**
**F-69330 Meyzieu (FR)**

(74) Mandataire : **Esson, Jean-Pierre et al**
**Rhône-Poulenc Interservices Service Brevets Chimie**
**25, quai Paul Doumer**
**F-92408 Courbevoie Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 138 670 B1**

Jouve, 18, rue St-Denis, 75001 Paris, France

**Description**

La présente invention concerne un procédé de fabrication de silanes hydrogénés par redistribution. Elle concerne plus particulièrement un procédé de fabrication de silane comportant au moins une liaison Si—H par réaction entre un silane moins hydrogéné ou non hydrogéné et un alkyle ou aryle hydrogéno-silane en présence d'un catalyseur.

Il est connu d'obtenir des silanes comportant au moins deux liaisons Si—H par dismutation de deux molécules d'hydrogéno-silane comportant éventuellement des groupements alkyle ou aryle. C'est ainsi que les brevets français n° 2 096 605, 2 118 725, 2 261 977, 2 290 447 et 2 290 448 décrivent de telles réactions de dismutation en présence de divers catalyseurs, la réaction mise en jeu lors de ces dismutations pouvant s'écrire :

$$2R_nH_mSiX_{4-(n+m)} \rightleftharpoons R_nH_{m+1}\ SiX_{3-(n+m)} + R_nH_{m-1}\ SiX_{5-(n+m)}$$

dans laquelle n représente un nombre entier égal à 0, 1, ou 2 ; m représente un nombre entier égal à 1, 2 ou 3 avec $n + m \leq 3$, R représente un groupement alkyle ou aryle et X un halogène.

Il est également connu d'obtenir des alkyle ou aryle hydrogénosilanes par redistribution entre un molécule d'hydrogéno-silane et une molécule d'alkyle ou aryle halogéno-silane. Les catalyseurs décrits pour ces réactions de redistribution sont notamment ceux faisant l'objet des brevets français n° 1 603 167, 2 290 447, 2 467 855, 2 290 448, 2 096 605 et 2 119 477, les réactions mises en jeu lors de ces redistributions pouvant s'écrire :

$$H_mSiX_{4-m} + R_nSiX_{4-n} \longrightarrow H_{m-1}SiX_{5-m} + R_nHSiX_{3-n}$$

dans laquelle m représente un nombre entier égal à 1, 2, 3 ou 4 et n représente un nombre entier égal à 1, 2 ou 3 et R représente un groupement alkyle ou aryle et X un halogène.

La présente invention concerne un procédé de fabrication de silane hydrogéné par une nouvelle réaction de redistribution entre un silane moins hydrogéné que celui désiré ou non hydrogéné et un alkyle ou aryle hydrogéno-silane en présence d'un système catalytique, la réaction mise en jeu pouvant s'écrire :

$$H_mSiX_{4-m} + R_nH_pSiX'_{4-(n+p)} \longrightarrow H_{m+1}SiX_{3-m} + R_nH_{p-1}SiX'_{4-(n+p)}X$$

dans laquelle R représente un groupement alkyle ou aryle, X et X' identiques ou différents représentent un halogène ou un groupement alkoxy, m représente un nombre entier égal à 0, 1, 2 ou 3 ; n et p identiques ou différents représentent des nombres entiers égaux à 1, 2 ou 3 avec $n + p \leq 4$.

Le procédé selon l'invention permet de fabriquer des hydrogénosilanes plus hydrogénés que le silane de départ avec des taux de transformation bien supérieurs à ceux que l'on obtient lorsque l'on fabrique ces produits par dismutation ; il permet en outre de valoriser des sous-produits obtenus lors de la synthèse directe des méthylchlorosilanes tel que le méthyldichlorosilane. Par ailleurs, le procédé selon l'invention est particulièrement adapté pour fabriquer du trichlorosilane, du dichlorosilane et/ou du silane notamment selon les réactions :

$$SiCl_4 + CH_3HSiCl_2 \longrightarrow HSiCl_3 + CH_3SiCl_3$$
$$HSiCl_3 + CH_3HSiCl_2 \longrightarrow H_2SiCl_2 + CH_3SiCl_3$$
$$HSiCl_3 + 3CH_3HSiCl_2 \longrightarrow SiH_4 + 3CH_3SiCl_3$$

Le procédé selon l'invention permet ainsi de fabriquer des matières premières permettant un accès aisé au silicium de qualité photovoltaïque ou électronique. Il permet également la valorisation du tétrachlorosilane, sous-produit lors de la fabrication du silicium de qualité photovoltaïque ou électronique, par craquage de trichlorosilane. Le tétrachlorosilane est ainsi valorisé par transformation en trichlorosilane et/ou dichlorosilane dans des conditions particulièrement économiques par rapport à celles connues dans la littérature.

La présente invention concerne en effet un procédé de fabrication de silane hydrogéné par redistribution caractérisé en ce que l'on met en réaction :

— un silane représenté par la formule : $H_mSiX_{4-m}$ dans laquelle X représente un halogène ou un groupement alkoxy et m représente un nombre entier égal 0, 1, 2 ou 3 ;

— un alkyle ou aryle hydrogéno-silane représenté par la formule : $R_nH_pSiX'_{4-(n+p)}$ dans laquelle X' représente un halogène ou un groupement alkoxy, R représente un groupement alkyle ou aryle et n et p identiques ou différents représentent des nombres entiers égaux à 1, 2 ou 3 avec $n + p \leq 4$ ;

— en présence d'un catalyseur choisi dans le groupe formé par : les sels d'ammonium quaternaire répondant à la formule $R_4'NY$, les sels de phosphonium quaternaire répondant à la formule $R_4'PY$, formules dans lesquelles R' identiques ou différents représentent un radical hydrocarboné ou halohydrocarboné monovalent et Y un halogène ; les amines tertiaires de formule générale NR'R"R"' dans laquelle R', R", R"' sont des radicaux hydrocarbonés monovalents identiques ou différents ; les résines échangeuses d'ions comportant des groupements amine tertiaire ou ammonium quaternaire ; et en ce que l'on récupère le ou les silanes hydrogénés formés.

Les silanes que l'on met en œuvre selon le procédé de l'invention sont ceux qui ont pour formule $H_mSiX_{4-m}$ dans laquelle X représente un halogène ou un groupement alkoxy et m un nombre entier égal à 0, 1, 2 ou 3. Selon un mode préféré de mise en œuvre de l'invention, on utilise : le tétrachlorosilane, le trichlorosilane, le dichlorosilane ou leurs mélanges.

Les alkyles ou aryles hydrogéno-silanes que l'on met en œuvre selon le procédé de l'invention sont ceux qui ont pour formule $R_nH_pSiX'_{4-(n+p)}$ dans laquelle X' représente un halogène ou un groupement alkoxy, R représente un groupement alkyle ou aryle et n et p identiques ou différents représentent des nombres entiers égaux à 1, 2 ou 3 avec $n + p \leq 4$.

Selon un mode de mise en œuvre préféré de l'invention, on utilise le méthylsilane, le méthylchlorosilane, le diméthylchlorosilane, le méthyldichlorosilane, le diméthylsilane, le triméthylsilane, le phényldichlorosilane, le phénylchlorosilane, le diphénylchlorosilane, l'éthyldichlorosilane ou leurs mélanges.

Les sels d'ammonium quaternaires mis en œuvre selon l'invention répondent à la formule $R'_4NY$ et les sels de phosphonium quaternaire mis en œuvre selon l'invention répondent à la formule $R'_4PY$, formules dans lesquelles R' identiques ou différents représentent un radical hydrocarboné monovalent et Y un halogène.

En particulier, R' peut être tout radical hydrocarboné monovalent, par exemple, un des radicaux alkyles tels qu'un radical méthyle, éthyle, isopropyle, butyle, hexyle-secondaire, 2-éthylhexyle ou octadécyle, un des radicaux cycloalkyles tels qu'un radical cyclohexyle ou cyclopentyle, un des radicaux aliphatiquement non saturés tels qu'un radical vinyle, allyle, hexényle, cyclopentényle ou butadiényle ou un des radicaux contenant des groupes aryles tels qu'un radical phényle, totyle, benzyle, biphényle, ou naphtyle.

R' peut également être tout radical halohydrocarboné monovalent, par exemple un des radicaux haloalkyles tels qu'un radical 3-chloropropyle, 3-3-3-trifluoropropyle ou 4-bromohexyle, un radical halocycloalkyle tel qu'un radical bromocyclopentyle ou difluorocyclohexyle, un des radicaux aliphatiquement non saturés tels qu'un radical chloroallyle ou chlorocyclohexényle et un des radicaux contenant des groupes aryles tels qu'un radical chlorophényle, dibromophényle, α, α, α-trifluorotolyle ou bromonaphtyle.

Y peut être tout halogène, par exemple le chlore, le brome ou l'iode.

Les amines tertiaires mis en œuvre selon l'invention répondent à la formule générale NR'R"R"' dans laquelle R', R" et R"' sont des radicaux hydrocarbonés monovalents identiques ou différents.

En particulier, R', R", R"' peuvent être tout radical alkyl, aryle, cycloalkyle, alkylaryle, alkylcycloalkyle, alcényle, alkylène (lorsque R' et R" sont reliés) généralement ces radicaux ont un nombre d'atome de carbone inférieur à 22.

Les amines tertiaires les plus couramment utilisés sont notamment les suivantes : la tri-n-propylamine, la triisopropylamine, la diisopropyl-n-éthylamine, la tri-n-butylamine, la triisobutylamine, la tri-sec-butylamine, la tri-n-pentylamine, la di-n-butyléthylamine, la di-isobutyléthylamine, la di-2-éthylbutylméthylamine, la di-n-octylméthylamine, la di-2-éthylhexylméthylamine, la dilaurylméthylamine, la triundécylamine, la trioctadécylamine, la n-octadécyl-n-propyléthylamine, la di-n-butylphénylamine, la triphénylamine, la tris(biphényl)amine, la 2-naphtyldi-n-butylamine, la tritolylamine, la trixylylamine, la tris(phénylméthylphényl)amine, la tris(2-phényléthyl)amine, la tris(8-phényloctyl)amine, la tricyclohexylamine, la tricyclooctylamine, la tris(4-méthyl-cyclohexyl)amine, la tris(2-cyclohexyléthyl)amine, la tris(3-n-buténył)-amine, la triisobuténylamine, la diallyl-n-butylamine, la N-n-propylpipéridine, la N-iso-butylpyrrolidine, la N-iso-butylmorpholine, etc...

Le catalyseur de l'invention peut également être constitué par une résine échangeuse d'ions insoluble dans les produits mis en œuvre dans la réaction et comportant des groupes amine, tertiaire, ou ammonium quaternaire dans lesquels les radicaux alkylamine ou alkylammonium contiennent de préférence de 1 à 8 atomes de carbone, ces groupes étant liés par un atome de carbone à la structure de la résine.

Le procédé selon l'invention peut être mis en œuvre en présence ou en l'absence de solvant. Dans ce dernier cas, ce sont les silanes de départ qui peuvent jouer le rôle de solvant. Quand on utilise un tiers solvant, ce dernier doit répondre à un certain nombre de conditions : il faut qu'il solubilise les silanes de départ ; il faut aussi qu'il soit inerte chimiquement vis-à-vis des silanes introduits ou formés.

On choisit, de préférence, un solvant comme par exemple, le chlorobenzène, l'orthodichlorobenzène, le benzène, le toluène, le cyclohexane, l'heptane, le dichloroéthane, le chlorure de méthylène, le dichlorobenzène, le tétrahydrofurane, le dioxane, le diméthoxyéthane.

Le procédé selon l'invention est mis en œuvre à une température comprise entre —30 °C et la température d'ébullition du milieu réactionnel.

On opère de préférence à la pression atmosphérique. Bien entendu, des pressions supérieures ou inférieures à la pression atmosphérique ne sont pas exclues.

On utilise le catalyseur en quantité telle que le rapport molaire du catalyseur (ou dans le cas des résines des groupements actifs de la résine) aux silanes de départ (silane et alkyle ou aryle hydrogéno-silane) est compris de préférence entre 10 et 0,0001. Encore plus préférentiellement, il est compris entre 0,5 et 0,005.

Le rapport molaire entre le silane et l'alkyle ou aryle hydrogéno-silane est, de préférence, compris entre 0,1 et 5, si ce rapport est élevé, on limite la réaction à la formation de silanes peu hydrogénés, par contre si ce rapport est faible, on peut poursuivre la réaction jusqu'à la formation de silanes plus hydrogénés jusqu'à $SiH_4$.

Le rapport molaire entre le solvant et les silanes de départ est compris entre 0 et 100 et de préférence entre 0 et 10.

Le ou les hydrogéno-silanes obtenus peuvent être soit séparés au fur et à mesure de leur formation s'ils sont peu solubles dans le milieu réactionnel et suffisamment volatils. On peut aussi séparer en fin de réaction les différents silanes obtenus (le ou les hydrogéno-silanes et le ou les alkyle ou aryle silanes formés) ainsi que les silanes n'ayant pas réagi selon les techniques bien connues de l'homme de l'art comme, par exemple, par distillation, solubilisation sélective, etc...

Il est à noter que le système catalytique mis en œuvre selon l'invention catalyse également et simultanément les réactions de dismutation des silanes comportant au moins une liaison Si—H ; ainsi la réaction de redistribution qui vient d'être décrite, suivie des réactions de dismutations simultanées des silanes présents comportant au moins une liaison Si—H peut conduire à l'obtention de mélanges plus ou moins complexes de silates. Par exemple la réaction de redistribution qui est écrite globalement

$$HSiCl_3 + 3CH_3HSiCl_2 \longrightarrow SiH_4 + 3CH_3SiCl_3$$

correspond en fait à l'addition des réactions de redistribution

$$CH_3HSiCl_2 + HSiCl_3 \longrightarrow CH_3SiCl_3 + H_2SiCl_2$$

et de dismutation $3H_2SiCl_2 \longrightarrow SiH_4 + 2HSiCl_3$. Dans le cas où le silane mis en œuvre pour la réaction de redistribution est le tétrachlorosilane qui ne se dismute pas (il ne contient pas de liaisons Si—H) si l'on veut éviter la dismutation du $H_2SiCl_2$ formé par la réaction de redistribution, il convient de le récupérer au fur et à mesure de sa formation.

La présente invention permet ainsi d'opérer la fabrication de silanes hydrogénés selon une nouvelle réaction de redistribution avec un taux de transformation exceptionnel et en mettant généralement en œuvre de faibles quantités de catalyseur.

D'autres caractéristiques et avantages de l'invention apparaîtront plus clairement à la lecture des exemples qui vont suivre.

Exemple N° 1

Dans un flacon de 8 ml muni d'un septum en vitron® on introduit :

28,5 $10^{-3}$ moles de chlorobenzène (solvant), soit 3,209 g,

0,39 $10^{-3}$ moles de chlorure de tétrabutylammonium, soit 108,3 mg.

Après avoir porté le flacon à la température de 30 °C, on introduit à l'aide d'une seringue,

8,78 $10^{-3}$ moles de $CH_3SiHCl_2$, soit 1,010 g,

4,67 $10^{-3}$ moles de $HSiCl_3$, soit 0,633 g.

La réaction de redistribution entre $CH_3SiHCl_2$ et $HSiCl_3$ est suivie par analyses périodiques du milieu réactionnel en chromatographie phase gazeuse.

Après 5 heures de réaction la composition est la suivante (pourcentages massiques) :

| | |
|---|---|
| $SiH_4$ | 0,14 % |
| $H_3SiCl$ | 0,52 % |
| $CH_3SiH_2Cl$ | 0,19 % |
| $H_2SiCl_2$ | 3,81 % |
| $HSiCl_3$ | 5,90 % |
| $CH_3SiHCl_2$ | 12,20 % |
| $SiCl_4$ | 0,10 % |
| $CH_3SiCl_3$ | 10,25 % |
| $C_6H_5Cl$ | 64,70 % |

ce qui correspond à un taux de transformation de $HSiCl_3$ de 54 % et de $CH_3SiHCl_2$ de 40 %.

Il est à noter que la réaction entre $HSiCl_3$ et $CH_3SiHCl_2$ est suivie d'une réaction du même type entre $H_2SiCl_2$ formé et $CH_3SiHCl_2$, avec formation de $H_3SiCl$ et de $SiH_4$. A ces réactions peuvent s'ajouter celles de dismutation des différents silanes présents dans le milieu réactionnel, ces réactions étant catalysées par les mêmes systèmes catalytiques.

La réaction principale suivie des réactions qui viennent d'être mentionnées peuvent donc conduire à l'obtention de mélanges plus ou moins complexes de silanes.

Exemple N° 2

Nous reproduisons dans cet exemple l'essai décrit dans l'exemple précédent mais en remplaçant le solvant $C_6H_5Cl$ par le cyclohexane :

| | |
|---|---|
| Cyclohexane | 2,184 g (25,9 $10^{-3}$ moles) |
| $(C_4H_9)_4NCl$ | 131,8 mg (0,47 $10^{-3}$ moles) |
| $HSiCl_3$ | 0,558 g (4,12 $10^{-3}$ moles) |
| $CH_3SiHCl_2$ | 0,909 g (7,90 $10^{-3}$ moles) |

Après 20 heures de réaction, la composition est la suivante :

| | |
|---|---|
| $SiH_4$ | 0,17 % |
| $H_3SiCl$ | 0,53 % |
| $CH_3SiH_2Cl$ | 0,19 % |
| $H_2SiCl_2$ | 4,17 % |
| $HSiCl_3$ | 7,13 % |
| $CH_3SiHCl_2$ | 15,30 % |
| $SiCl_4$ | 0,31 % |
| $CH_3SiCl_3$ | 10,99 % |
| $C_6H_{12}$ | 57,73 % |

Ce qui correspond à un taux de transformation de $HSiCl_3$ de 52 % et de $CH_3SiHCl_2$ de 36 %.

Exemple N° 3

Nous effectuons, dans cet exemple, un essai de redistribution entre $HSiCl_3$ et $CH_3SiHCl_2$, toujours en présence de $(C_4H_9)_4NCl$, mais sans solvant :

| | |
|---|---|
| $(C_4H_9)_4NCl$ | 137,4 mg (0,49 $10^{-3}$ moles) |
| $HSiCl_3$ | 0,440 g (3,35 $10^{-3}$ moles) |
| $CH_3SiHCl_2$ | 0,970 g (8,43 $10^{-3}$ moles) |

Après 1 h 20 de réaction, la composition est la suivante :

| | |
|---|---|
| $SiH_4$ | 0,21 % |
| $H_3SiCl$ | 0,65 % |
| $CH_3SiH_2Cl$ | 0,52 % |
| $H_2SiCl_2$ | 10,12 % |
| $HSiCl_3$ | 11,99 % |
| $CH_3SiHCl_2$ | 45,79 % |
| $SiCl_4$ | 0,88 % |
| $CH_3SiCl_3$ | 20,96 % |

ce qui correspond à un taux de transformation de $HSiCl_3$ de 58 % et de $CH_3SiHCl_2$ de 27 %.

Exemple N° 4

Nous reproduisons dans cet exemple l'essai décrit dans l'exemple n° 1 mais en remplaçant $(C_4H_9)_4NCl$ par le chlorure de tétrabutyl phosphonium $(C_6H_9)_4PCl$.

| | |
|---|---|
| Chlorobenzène | 3,173 g (28,2 $10^{-3}$ moles) |
| $(C_4H_9)_4PCl$ | 149,6 mg (0,51 $10^{-3}$ moles) |
| $HSiCl_3$ | 0,684 g (5,05 $10^{-3}$ moles) |
| $CH_3SiHCl_2$ | 1,006 g (8,75 $10^{-3}$ moles) |

Après 5 h de réaction, la composition est la suivante :

| | |
|---|---|
| $SiH_4$ | 0,18 % |
| $H_3SiCl$ | 0,80 % |
| $CH_3SiH_2Cl$ | 0,23 % |
| $H_2SiCl_2$ | 3,95 % |
| $HSiCl_3$ | 5,84 % |
| $CH_3SiHCl_2$ | 10,37 % |

| | |
|---|---|
| $SiCl_4$ | 0,17 % |
| $CH_3SiCl_3$ | 12,20 % |
| $C_6H_5Cl$ | 63,29 % |

ce qui correspond à un taux de transformation de $HSiCl_3$ de 57 % et de $CH_3SiHCl_2$ de 53 %.

Exemple N° 5

Nous utilisons, dans cet exemple, $(C_4H_9)_3N$ comme catalyseur, toujours en présence de $C_6H_5Cl$ comme solvant.

| | |
|---|---|
| Chlorobenzène | 3,058 g (27,2 $10^{-3}$ moles) |
| $(C_4H_9)_3N$ | 89,8 mg (0,48 $10^{-3}$ moles) |
| $HSiCl_3$ | 0,530 g (3,91 $10^{-3}$ moles) |
| $CH_3SiHCl_2$ | 0,994 g (8,64 $10^{-3}$ moles) |

Après 24 h de réaction, la composition est la suivante :

| | |
|---|---|
| $SiH_4$ | 0 % |
| $H_3SiCl$ | 0,11 % |
| $CH_3SiH_2Cl$ | 0,09 % |
| $H_2SiCl_2$ | 2,03 % |
| $HSiCl_3$ | 8,03 % |
| $CH_3SiHCl_2$ | 18,62 % |
| $SiCl_4$ | 0,44 % |
| $CH_3SiCl_3$ | 3,30 % |
| $C_6H_5Cl$ | 65,46 % |

ce qui correspond à un taux de transformation de $HSiCl_3$ de 29 % et de $CH_3SiHCl_2$ de 13 %.

Exemple N° 6

Nous effectuons, dans cet exemple, un essai de redistribution entre $HSiCl_3$ et $CH_3SiHCl_2$ en utilisant l'Amberlist A 21® comme catalyseur, sans solvant.

L'Amberlist A 21® est une résine échangeuse d'anions, faiblement basique, comportant des groupements actifs $-N(CH_3)_2$.

Avant utilisation, nous l'avons séchée par entraînement azéotropique de l'eau à l'hexane puis élimination du solvant résiduel par séchage à 60 °C sous vide.

L'essai est effectué sur le mélange réactionnel suivant :

| | |
|---|---|
| Amberlist A 21® séchée | 124,5 mg |
| $HSiCl_3$ | 1,569 g (11,58 $10^{-3}$ moles) |
| $CH_3SiHCl_2$ | 2,253 g (19,59 $10^{-3}$ moles) |

Après 24 heures de réaction, la composition est la suivante :

| | |
|---|---|
| $SiH_4$ | 0,05 % |
| $H_3SiCl$ | 0,37 % |
| $CH_3SiH_2Cl$ | 0,29 % |
| $H_2SiCl_2$ | 8,55 % |
| $HSiCl_3$ | 25,90 % |
| $CH_3SiHCl_2$ | 45,96 % |
| $SiCl_4$ | 1,81 % |
| $CH_3SiCl_3$ | 13,94 % |

ce qui correspond à un taux de transformation de $HSiCl_3$ de 35 % et de $CH_3SiHCl_2$ de 19 %.

Exemple N° 7

Nous reproduisons, dans cet exemple, l'essai de l'exemple n° 6, mais en remplaçant l'Amberlist A 21® par l'Amberlist A 26®.

L'Amberlist A 26® est une résine échangeuse d'anions, fortement basique, comportant des groupements actifs $-N(CH_3)_3Cl$.

Nous la séchons, avant utilisation, dans les mêmes conditions que l'Amberlist A 21®.

L'essai est effectué sur le mélange réactionnel suivant :

| | |
|---|---|
| Amberlist A 26® séchée | 117,6 g |
| $HSiCl_3$ | 0,699 g (5,16 $10^{-3}$ moles) |
| $CH_3SiHCl_2$ | 1,097 g (9,54 $10^{-3}$ moles) |

Après 20 heures de réaction, la composition est la suivante :

| | |
|---|---|
| $SiH_4$ | 0,02 % |
| $H_3SiCl$ | 0,28 % |
| $CH_3SiH_2Cl$ | 0,17 % |
| $H_2SiCl_2$ | 7,18 % |
| $HSiCl_3$ | 24,20 % |
| $CH_3SiHCl$ | 49,28 % |
| $SiCl_4$ | 2,57 % |
| $CH_3SiCl_3$ | 10,15 % |

ce qui correspond à un taux de transformation de $HSiCl_3$ de 34 % et de $CH_3SiHCl_2$ de 14 %.

## Revendications

1. Procédé de fabrication de silane hydrogéné par redistribution caractérisé en ce que l'on met en réaction :

— un silane représenté par la formule : $H_mSiX_{4-m}$ dans laquelle X représente un halogène ou un groupement alkoxy et m représente un nombre entier égal à 0, 1, 2 ou 3 ;

— un alkyle ou aryle hydrogéno-silane représenté par la formule $R_nH_pSiX'_{4-(n+p)}$ dans laquelle X' représente un halogène ou un groupement alkoxy, R représente un groupement alkyle ou aryle et n et p identiques ou différents représentent des nombres entiers égaux à 1, 2 ou 3 avec $n + p \leq 4$ ;

— en présence d'un catalyseur choisi dans le groupe formé par : les sels d'ammonium quaternaire répondant à la formule $R'_4NY$, les sels de phosphonium quaternaire répondant à la formule $R'_4PY$, formules dans lesquelles R' identiques ou différents représentent un radical hydrocarboné ou halohydrocarboné monovalent et Y un halogène ; les amines tertiaires de formule générale NR'R"R"' dans laquelle R', R", R"' sont des radicaux hydrocarbonés monovalents identiques ou différents ; les résines échangeuses d'ions comportant des groupements amine tertiaire ou ammonium quaternaire ; et en ce que l'on récupère le ou les silanes hydrogénés formés.

2. Procédé selon la revendication 1 caractérisé en ce que les sels d'ammonium quaternaires $R'_4NY$ et les sels de phosphonium quaternaire $R'_4PY$ sont tels que R' identiques ou différents est choisi parmi les radicaux : méthyle, éthyle, isopropyle, butyle, hexyle-secondaire, 2-éthylhexyle, octadécyle, cyclohexyle, cyclopentyle, vinyle, allyle, hexényle, cyclopentényle, butaniényle, phényle, tolyle, benzyle, biphényle, naphtyle, 3-chloropropyle, 3-3-3-trifluoropropyle, 4-bromohexyle, bromocyclopentyle, difluorocyclohexyle, chloroallyle, chlorocyclohexényle, chlorophényle, dibromophényle, α,α,α-trifluorotolyle, bromonaphtyle.

3. Procédé selon la revendication 1, caractérisé en ce que les radicaux R', R", R"' des amines tertiaires ont un nombre d'atome de carbone inférieur à 22.

4. Procédé selon la revendication 1 ou 3 caractérisé en ce que les amines tertiaires sont choisies parmi : la tri-n-propylamine, la triisopropylamine, la diisopropyl-n-éthylamine, la tri-n-butylamine, la triisobutylamine, la tri-sec-butylamine, la tri-n-pentylamine, la di-n-butyléthylamine, la di-isobutyléthylamine, la di-2-éthylbutylméthylamine, la di-n-octylméthylamine, la di-2-éthylhexylméthylamine, la dilaurylméthylamine, la triundécylamine, la trioctadécylamine, la n-octadécyl-n-propyléthylamine, la di-n-butylphénylamine, la triphénylamine, la tris(biphényl)amine, la 2-naphtyldi-n-butylamine, la tritolylamine, la trixylylamine, la tris(phényl-méthylphényl)amine, la tris(2-phényléthyl)amine, la tris(8-phényloctyl)amine, la tricyclohexylamine, la tricyclooctylamine, la tris(4-méthylcyclohexyl)amine, la tris(2-cyclohexyléthyl)amine, la tris(3-n-buténypl)amine, la triisobuténylamine, la diallyl-n-butylamine, la N-n-propylpipéridine, la N-iso-butylpyrrolidine, la N-iso-butylmorpholine.

5. Procédé selon la revendication 1 caractérisé en ce que la résine échangeuse d'ions est insoluble dans les produits mis en œuvre dans la réaction et comporte des groupes alkyl-amine tertiaire ou alkylammonium quaternaire dans lesquels les radicaux alkyle ont de 1 à 8 atomes de carbone.

6. Procédé selon la revendication 1 caractérisé en ce que le rapport molaire entre le catalyseur (ou dans le cas de résines des groupements actifs de la résine) et les silanes de départ est compris entre 10 et 0,0001.

7. Procédé selon la revendication 5 caractérisé en ce que le rapport molaire précité est compris entre 0,5 et 0,005.

## Claims

1. A process for the manufacture of hydrogenated silane by redistribution, characterized in that
— a silane represented by the formula : $H_mSiX_{4-m}$ in which X denotes a halogen or an alkoxy group and m denotes an integer equal to 0, 1, 2 or 3, is reacted with
— an alkyl or aryl hydrogenosilane represented by the formula : $R_nH_pSiX'_{4-(n+p)}$ in which X' denotes a halogen or an alkoxy group, R denotes an alkyl or aryl group and n and p, which may be identical or different, denote integers equal equal to 1, 2 or 3 with $n + p \leq 4$ ;
— in the presence of a catalyst chosen from the group formed by : quaternary ammonium salts corresponding to the formula $R'_4NY$, quaternary phosphonium salts corresponding to the formula $R'_4PY$, in which formulae R', which may be identical or different, denote a monovalent hydrocarbon or halohydrocarbon radical and Y a halogen ; tertiary amines of the general formula NR'R"R''' in which R', R", R''' are monovalent hydrocarbon radicals which may be identical or different ; ion exchange resins containing tertiary amine groups or quaternary ammonium groups ; and the hydrogenated silane or silanes formed is, or are, recovered.

2. A process according to Claim 1, characterized in that the quaternary ammonium salts $R'_4NY$ and the quaternary phosphonium salts $R'_4PY$ are such that R' which are identical or different are chosen from the radicals : methyl, ethyl, isopropyl, butyl, secondary hexyl, 2-ethylhexyl, octadecyl, cyclohexyl, cyclopentyl, vinyl, allyl, hexenyl, cyclopentenyl, butadienyl, phenyl, tolyl, benzyl, diphenyl, naphthyl, 3-chloropropyl, 3,3,3-trifluoropropyl, 4-bromohexyl, bromocyclopentyl, difluorocyclohexyl, chloroallyl, chlorocyclohexenyl, chlorophenyl, dibromophenyl, α,α,α-trifluorotolyl, and bromonaphthyl.

3. A process according to Claim 1, characterized in that the radicals R', R" and R''' of the tertiary amines have a number of carbon atoms which is smaller than 22.

4. A process according to Claim 1 or 3, characterized in that the tertiary amines are chosen from : tri-n-propylamine, triisopropylamine, diisopropyl-n-ethylamine, tri-n-butyl-amine, triisobutylamine, tri-sec-butylamine, tri-n-pentylamine, di-n-butylethylamine, diisobutylethylamine, di-2-ethylbutylmethylamine, di-n-octylmethylamine, di-2-ethylhexylmethylamine, dilaurylmethylamine, triundecylamine, trioctadecylamine, n-octadecyl-n-propyl-ethylamine, di-n-butylphenylamine, triphenylamine, tris-(diphenyl)amine, 2-naphthyldi-n-butylamine, tritolylamine, trixylylamine, tris(phenylmethylphenyl)amine, tris(2-phenylethyl)amine, tris(8-phenyloctyl)amine, tricyclohexylamine, tricyclooctylamine, tris(4-methylcyclohexyl)amine, tris(2-cyclohexylethyl)amine, tris(3-n-butenyl)amine, triisobutenylamine, diallyl-n-butylamine, N-n-propylpiperidine, N-isobutylpyrrolidine and N-isobutylmorpholine.

5. A process according to Claim 1, characterized in that the ion exchange resin is insoluble in the products employed in the reaction and contains tertiary alkylamine groups or quaternary alkylammonium groups in which the alkyl radicals have from 1 to 8 carbon atoms.

6. A process according to Claim 1, characterized in that the molar ratio of the catalyst (or in the case of resins of the active groups in the resin) to the original silanes is between 10 and 0.0001.

7. A process according to Claim 5, characterized in that the abovementioned molar ration is between 0.5 and 0.005.

**Patentansprüche**

1. Verfahren zur Herstellung hydrogenierter Silane durch Umgruppierung, dadurch gekenzeichnet, daß man zur Reaktion bringt :
— ein Silan entsprechend der Formel : $H_mSiX_{4-m}$ in der X ein Halogen oder eine Alkoxygruppe darstellt und m eine ganze Zahl darstellt und gleich 0, 1, 2 oder 3 ist ;
— ein Alkyl- oder Aryl-Hydrogensilan entsprechend der Formel $R_nH_pSiX'_{4-(n+p)}$, in der X' ein Halogen oder eine Alkoxygruppe darstellt, R eine Alkyl- oder Arylgruppe darstellt und n und p gleich oder verschieden sind und ganze Zahlen darstellen und gleich 1, 2 oder 3 sind, mit $n + p \leq 4$ ;
— in Gegenwart eines Katalysators ausgewählt aus der Gruppe bestehend aus : den quaternären Ammoniumsalzen, die der Formel $R'_4NY$ entsprechen, den quaternären Phosphoniumsalzen, die der Formel $R'_4PY$ entsprechen, wobei in diesen Formeln R' jeweils gleich oder unterschiedlich ist und einen monovalenten Kohlenwasserstoff- oder Halogenkohlenwasserstoffrest darstellt un Y ein Halogen darstellt ; den tertiären Aminen der allgemeinen Formel NR'R"R''', in der R', R", R''' monovalente gleiche oder verschiedene Kohlenwasserstoffreste sind und den Ionenaustauscherharzen, die tertiäre Aminreste oder quaternäre Ammoniumreste enthalten und daß man das oder die gebildeten hydrogenierten Silane gewinnt.

2. Verfahren nach Anspruch 1, dadurch gekennzeichnet, daß die quaternären Ammoniumsalze $R'_4NY$ und die quaternären Phosphoniumsalze $R'_4PY$ solche sind, bei denen R' gleich oder verschieden ist und ausgewählt wird aus den Resten : Methyl, Ethyl, Isopropyl, Butyl, sekundäres Hexyl, 2-Ethylhexyl, Octadecyl, Cyclohexyl, Cyclopentyl, Vinyl, Allyl, Hexenyl, Cyclopentenyl, Butanienyl, Phenyl, Tolyl, Benzyl, Biphenyl, Naphtyl, 3-Chlorpropyl, 3-3-3-Trifluorpropyl, 4-Bromhexyl, Bromcyclopentyl, Difluorcyclohexyl, Chlorallyl, Chlorcyclohexenyl, Chlorphenyl, Dibromphenyl, α,α,α-Trifuortolyl, Bromnaphtyl.

3. Verfahren nach Anspruch 1, dadurch gekennzeichnet, daß die Reste R', R", R''' der tertiären Amine eine Anzahl Kohlenstoffatome kleiner als 22 enthalten.

4. Verfahren nach Anspruch 1 oder 3, dadurch gekennzeichnet, daß die tertiären Amine ausgewählt werden aus : Tri-n-Propylamin, Triisopropylamin, Diisopropyl-n-Ethylamin, Tri-n-Butylamin, Triisobutylamin, Tri-Sekundärbutylamin, Tri-n-Pentylamin, Di-n-Butylethylamin, Di-Isobutylethylamin, Di-2-Ethylbutylmethylamin, Di-n-Octylmethylamin, Di-2-Ethylhexylmethylamin, Dilaurylmethylamin, Triundecylamin, Trioctadecylamin, n-Octadecyl-n-Propylethylamin, Di-n-Butylphenylamin, Triphenylamin, Tris(Biphenyl)amin, 2-Naphtyldi-n-Butylamin, Tritolylamin, Trixylylamin, Tris(Phenyl-Methylphenyl)amin, Tris(2-Phenylethyl)amin, Tris(8-Phenyloctyl)amin, Tricyclohexylamin, Tricyclooctylamin, Tris(4-Methylcyclohexyl)amin, Tris(2-Cyclohexylethyl)amin, Tris(3-n-Butenyl)amin, Triisobutenylamin, Diallyl-n-Butylamin, N-n-Propylpiperidin, N-Isobutylpyrrolidin, N-Isobutylmorpholin.

5. Verfahren nach Anspruch 1, dadurch gekennzeichnet, daß das Ionenaustauscherharz in den bei der Reaktion umgesetzten Produkten unlöslich ist und tertiäre Alkylamingruppen oder quaternäre Alkylammoniumgruppen aufweist, in denen die Alkylreste 1 bis 8 Kohlenstoffatome haben.

6. Verfahren nach Anspruch 1, dadurch gekennzeichnet, daß das molare Verhältnis zwischen dem Katalysator (oder im Fall der Harze den aktiven Resten des Harzes) und den Silanen zu Beginn zwischen 10 und 0,0001 liegt.

7. Verfahren nach Anspruch 5, dadurch gekennzeichnet, daß das vorgenannte molare Verhältnis zwischen 0,5 und 0,005 liegt.